# EUROPÄISCHE PATENTSCHRIFT

(11) **EP 2 036 779 B1**
(45) Veröffentlichungstag und Bekanntmachung des Hinweises auf die Patenterteilung: **14.03.2012**
(21) Anmeldenummer: 08104823.3
(22) Anmeldetag: 22.07.2008
(51) Int. Cl.: B60R 21/0132

(54) **Verfahren und Steuergerät zur Ansteuerung von Personenschutzmitteln für ein Fahrzeug**
Control device and method for controlling personal safety devices for a vehicle
Procédé et appareil de commande destinés à la commande de moyens de protection de personnes pour véhicule

(30) Priorität: 17.09.2007 DE 102007044344
(43) Veröffentlichungstag der Anmeldung: 18.03.2009
(73) Patentinhaber: Robert Bosch GmbH, 70442 Stuttgart (DE)
(72) Erfinder: Hiemer, Marcus, 71701, Schwieberdingen (DE); Koerner, Olaf, 71640, Ludwigsburg (DE)

(56) Entgegenhaltungen:
- US-A- 5 519 613
- US-A1- 2005 021 192

## Beschreibung

### Stand der Technik

Die Erfindung betrifft ein Verfahren bzw. ein Steuergerät zur Ansteuerung von Personenschutzmitteln nach der Gattung der unabhängigen Patentansprüche.

Aus DE 100 65 518 A1 ist es bereits bekannt, aus der Stärke der Oszillationen in einem Beschleunigungssignal Aussagen über die Härte des Aufprallobjekts zu gewinnen. Dabei zeigen beispielsweise geringe Signaloszillationen ein schwaches Brechen der Fahrzeugstruktur an, was auf eine weiche Barriere schließen lässt. Damit ist es möglich, einen Kollisionspartner hinsichtlich der Masseverhältnisse und der Steifigkeit zu klassifizieren.

Die US 2005/021192 A1 gemäß Oberbegriff des Anspruchs 1 offenbart ein Kollisionsobjekt-Diskriminiergerät für Fahrzeuge, welches zwei Kollisionsdetektionssensoren enthält, um zwischen den Arten eines Kollisionsobjektes, basierend auf den Ausgangsgrößen der zwei Sensoren, zu diskriminieren. Das Kollisionsobjekt wird, basierend auf einer Kollisionsbreite, die mit Hilfe eines Kollisionsbreite-Detektionssensor detektiert wird, ermittelt, welcher an einem Fahrzeugkörper befestigt ist. Alternativ wird das Kollisionsobjekt, basierend auf einer Differenz zwischen den Betriebseigenschaften der zwei Sensoren, bestimmt. Als weitere Alternative sind die zwei Sensoren in einer einzelnen Einheit integriert, die eine Vielzahl an Sensorzellen enthält.

Die US 5519613 A zeigt ein System und ein Verfahren zum Diskriminieren von Aufprallen kurzer Perioden

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass die Bestimmung der Steifigkeit in Abhängigkeit von einer zeitlichen Änderung wenigstens eines Beschleunigungssignals erfolgt. Damit kann eine Bestimmung der Steifigkeit genauer erfolgen als es im Stand der Technik bekannt ist. Die Abhängigkeit der Steifigkeit von dieser zeitlichen Änderung ergibt sich aus einer Betrachtung eines Ersatzfedermassemodells für beide Kollisionsgegner, also das eigene Fahrzeug und das Aufprallobjekt.

Die Ansteuerung bedeutet vorliegend das Aktivieren von Personenschutzmitteln wie passiven Personenschutzmitteln, beispielsweise Airbags, Gurtstraffer, crashaktive Kopfstützen und aktive Personenschutzmittel wie Bremsen und eine Fahrdynamikregelung. Auch ein Notruf ist hierunter subsummierbar.

Die Steifigkeit eines Unfallgegners ist ein struktureller Parameter, der beispielsweise angibt, wann der Unfallgegner sich elastisch verformt. Auch die Kraft, die aufgewendet werden muss, um diese Verformung zu erreichen, geht aus der Steifigkeit hervor. Die Steifigkeit ist vom Werkstoff des Unfallgegners und der Geometrie abhängig. Allgemein gibt die Steifigkeit den Zusammenhang zwischen der Last, die auf den Unfallkörper einwirkt, und dessen elastischer Verformung an.

Die zeitliche Änderung wenigstens eines Beschleunigungssignals gibt an, beispielsweise wie sich das Beschleunigungssignal in Abhängigkeit von der Zeit ändert, d. h. die Dynamik des Beschleunigungssignals wird damit erfasst. Es ist jedoch möglich, dass auch die zweite oder dritte Ableitung des Beschleunigungssignals hierfür verwendet wird. Das Beschleunigungssignal wird von einem Beschleunigungssensor bzw. Sensorik erzeugt, die entweder in einer oder mehreren Raumrichtungen empfindlich ist.

Unter einem Steuergerät wird ein elektrisches Gerät verstanden, das Sensorsignale verarbeitet und in Abhängigkeit davon die Personenschutzmittel ansteuert. Dabei ist die Ansteuerungsschaltung üblicherweise ein Prozessor wie ein Mikrocontroller; sie kann jedoch auch diskret oder als ASIC ausgebildet sein. Auch Kombinationen hiervon sind möglich. Das Steifigkeitsmodul ist dabei entweder ein Hardware- oder Softwareabschnitt. Auch eine Kombination davon ist möglich. Wird für die Ansteuerungsschaltung wenigstens ein Prozessor verwendet, dann benötigt auch die Ansteuerungsschaltung Software. Auch Dual-Core-Prozessoren sind hierfür geeignet.

Durch die in den abhängigen Ansprüchen aufgeführten Maßnahmen und Weiterbildungen sind vorteilhafte Verbesserungen des in den unabhängigen Patentansprüchen angegebenen Verfahrens zur Ansteuerung von Personenschutzmitteln für ein Fahrzeug bzw. Steuergerät zur Ansteuerung von Personenschutzmitteln für ein Fahrzeug möglich.

Es ist vorteilhaft, dass die zeitliche Änderung mittels eines Minimal-Varianzschätzers bestimmt wird. Ein solcher Minimal-Varianzschätzer vermeidet die Verstärkung von hochfrequenten Signalanteilen und somit eine suboptimale Bestimmung der zeitlichen Änderung des Beschleunigungssignals. Eine besonders vorteilhafte Ausprägung dieses Minimal-Varianzschätzers ist der sogenannte Least-Square-Schätzer. Dieser Least-Square-Schätzer ist rekursiv ausgebildet. Dies ermöglicht Einsparungen bei Laufzeit und Speicher in einem Steuergerätealgorithmus. Bei jeder neuen Schätzung wird dabei lediglich der letzte Schätzwert unter Einbeziehung der statistischen Eigenschaften des Signals korrigiert, so dass der Begriff "rekursiv" damit erklärt ist. Dieses rekursive Vorgehen spart damit Rechenleistung. Ein rekursives Least-Square-Verfahren ist in der Literatur beispielsweise in U. Kiencke/L. Nielsen: Automotive Control Systems, Springer Verlag, 2. Auflage 2004 beschrieben. Der Minimal-Varianzschätzer bzw. der Least-Square-Schätzer können hard- und/oder softwaremäßig ausgebildet sein.

Vorteilhafter Weise verwendet man für den rekursiven Least-Square-Schätzer einen Vergessensfaktor, der es ermöglicht, eine Anpassung der zeitlichen Änderung der Beschleunigung möglichst schnell zu erfassen und sich darauf anzupassen. Dieser Vergessensfaktor ist insbesondere applizierbar in Abhängigkeit vom Fahrzeugtyp. Denn unterschiedliche Fahrzeuge können bezüglich der zeitlichen Änderung des Beschleunigungssignals eine unterschiedliche Dynamik aufweisen. Mit diesem applizierbaren Vergessensfaktor kann man dies jedoch ausgleichen.

Es ist wesentlich, dass nicht nur die zeitliche Änderung des Beschleunigungssignals unter die vorliegende Begriffsbildung passt, sondern auch ein vorverarbeitetes Beschleunigungssignal und dabei die zeitliche Änderung dieses vorverarbeiteten Beschleunigungssignals. Vorverarbeitungen können Filterungen, Mittelwertbildungen etc. sein.

Die Verwendung eines Minimal-Varianzschätzers ermöglicht eine optimale Schätzung der Änderung des Beschleunigungssignals aufgrund der statistischen Eigenschaften dieses Beschleunigungssignals. Dies ermöglicht eine genauere Schätzung.

Weiterhin ist der minimale Varianzschätzer gedächtnisbehaftet, was eine Anpassung an die Dynamik des zu schätzenden Signals ermöglicht.

Eine besonders vorteilhafte Ausprägung der Erfindung ist dadurch gegeben, dass der Minimal-Varianzschätzer mit einem Schwellwertvergleicher verbunden ist und in diesen Schwellwertvergleicher ein Schwellwertvergleich durchgeführt wird, wobei das Ausgangssignal des Minimal-Varianzschätzers, also die zeitliche Änderung des Beschleunigungssignals, diesem Schwellwertvergleich zugeführt wird. Der Schwellwertvergleich wird dabei derart gestaltet, dass dieser in Abhängigkeit von einem ersten Merkmal durchgeführt wird und dieses Merkmal von wenigstens einem Unfallsignal wie beispielsweise im Beschleunigungssignal, einem Luftdrucksignal, einem Precrash-Signal usw. abgeleitet ist. Das Ergebnis dieses Schwellwertvergleichs dient zur Beeinflussung eines Ansteuerungsalgorithmus. Diese Beeinflussung kann beispielsweise durch die Verschiebung von Kennlinien erfolgen. Auch andere Änderungen der Kennlinien sind dabei möglich. Alternativ ist es möglich, dass den Merkmalen, die im Ansteuerungsalgorithmus verwendet werden, mit Zu- oder Abschlägen beaufschlagt werden.

Dieser Ansteuerungsalgorithmus kann vorteilhafter Weise einen Merkmalsvektor verwenden und aus der Lage dieses Merkmalsvektors heraus entscheiden, ob die Personenschutzmittel angesteuert werden sollen oder nicht. Auch diese Merkmale, die mit dem ersten Merkmal identisch sein sollen, werden in Abhängigkeit von einem Unfallsignal mit dem Beschleunigungssignal erzeugt.

Der Schwellwertvergleicher oder die Schwellwertvergleicher können hard-und/oder softwaremäßig ausgebildet sein.

Ausführungsbeispiele der Erfindung sind in der Zeichnung dargestellt und werden in der nachfolgenden Beschreibung näher erläutert.

Es zeigen
Figur 1 ein Blockschaltbild des erfindungsgemäßen Steuergeräts in einem Fahrzeug mit angeschlossenen Komponenten,
Figur 2 eine Softwarestruktur auf einem Mikrocontroller,
Figur 3 ein Flussdiagramm des erfindungsgemäßen Verfahrens und
Figur 4 ein Blockschaltbild des erfindungsgemäßen Verfahrens.

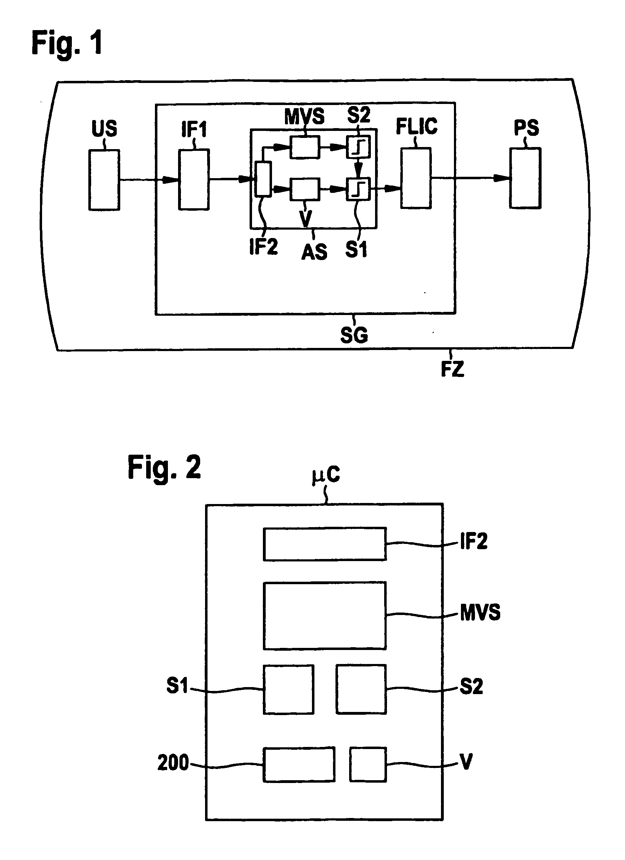

Figur 1 zeigt ein Blockschaltbild des erfindungsgemäßen Steuergeräts SG in einem Fahrzeug FZ mit angeschlossenen Komponenten einer Unfallsensorik US und anzusteuernden Personenschutzmitteln PS.

Die Unfallsensorik US sind beispielsweise Aufprallsensoren wie Beschleunigungssensoren, Luftdrucksensoren und Körperschallsensoren. Es kann sich jedoch auch zusätzlich oder anstatt um Unfallsensoren wie Radar, Video, Lidar oder Ultraschallsensoren handeln. Diese verschiedenen Sensoren liefern ihre Signale an eine Schnittstelle IF1 im Steuergerät SG. Die Schnittstelle IF1 ist vorliegend als integrierter Schaltkreis ausgebildet. Es ist möglich, diese Schnittstelle aus diskreten oder mehreren integrierten Schaltkreisen oder Kombinationen daraus zu bilden. Es ist möglich, die Schnittstelle IF1 auch softwaremäßig beispielsweise auf einem Mikrocontroller vorzusehen.

Vorliegend sind nur die Komponenten dargestellt, die für das Verständnis der Erfindung notwendig sind. Weitere Komponenten, die für den Betrieb des Steuergeräts notwendig sind, sind der Einfachheit halber weggelassen worden.

Die Schnittstelle IF1 überträgt die Unfallsignale in einem geeigneten Format an die Ansteuerungsschaltung AS, die beispielsweise als Mikrocontroller ausgebildet ist. Auch andere Prozessortypen wie Dual-Core-Prozessoren oder Mikroprozessoren sind vorliegend möglich. Die Ansteuerungsschaltung AS kann jedoch auch als ASIC oder FPGA oder zusätzlich aus diskreten Bauelementen aufgebaut sein. Die Sensorsignale werden dabei in der Ansteuerungsschaltung AS von einer weiteren Schnittstelle IF2, die beispielsweise eine Softwareschnittstelle ist, empfangen, beispielsweise über den sogenannten SPI (Serial Peripheral Interbus). Die Sensorsignale, also insbesondere das Beschleunigungssignal, werden zum Einen einer Vorverarbeitung V und parallel einem Minimal-Varianzschätzer MVS zugeführt. Die Vorverarbeitung kann eine Filterung, Integration, Mittelwertbildung usw. umfassen. Diese Vorverarbeitung V dient zur Bildung von Merkmalen, die in einen Merkmalsvektor zusammengefasst werden. Dieser Merkmalsvektor wird im Folgenden dann klassifiziert, um in Abhängigkeit von dieser Klassifikation die Ansteuerungsentscheidung zu treffen.

Der Minimal-Varianzschätzer bestimmt erfindungsgemäß die zeitliche Änderung des Beschleunigungssignals oder eines davon abgeleiteten Signals. Diese zeitliche Änderung wird als Ergebnis einem ersten Schwellwertentscheider S1 übertragen. Dieser erste Schwellwertentscheider S1 vergleicht einen Vektor, der sich aus der zeitlichen Änderung und einem weiteren Merkmal ergibt, das aus den Unfallsignalen abgeleitet wurde. Wie dieser Merkmalsvektor, also ein zweiter Merkmalsvektor, im Vergleich zu dem Schwellwert des Schwellwertentscheiders 1 liegt, dient als Beeinflussungssignal für einen zweiten Schwellwertentscheider S2, der den Merkmalsvektor aus der Vorverarbeitung V untersucht. Dieser zweite Schwellwertentscheider wird also durch das Beeinflussungssignal des ersten Schwellwertentscheiders S1 hinsichtlich seiner Kennlinie beeinflusst. Diese Beeinflussung der Kennlinie kann in verschiedensten Richtungen oder Formungen ausgeprägt sein. Das Ergebnis des Schwellwertentscheiders S2 wird als Ansteuerungssignal ausgegeben, und zwar an die Zündschaltung FLIC, die die Leistungsschalter aufweist, um die Personenschutzmittel wie Airbags zu bestromen.

Figur 2 zeigt einen Mikrocontroller µC als die Ansteuerungsschaltung mit einer Softwarestruktur, um die Erfindung zu verwirklichen. Eine Schnittstelle IF2 ist als Softwareelement vorhanden, die die Signale an den Minimal-Varianzschätzers MVS und die Vorverarbeitung V übergibt. Wie oben dargestellt, sind ebenfalls hier die Schwellwertentscheider S1 und S2 vorhanden und ein Modul 200, um das Ansteuerungssignal für die Zündschaltung FLIC zu erzeugen. Diese Softwaremodule übergeben ihre Daten in der üblichen, dem Fachmann geläufigen Art und Weise.

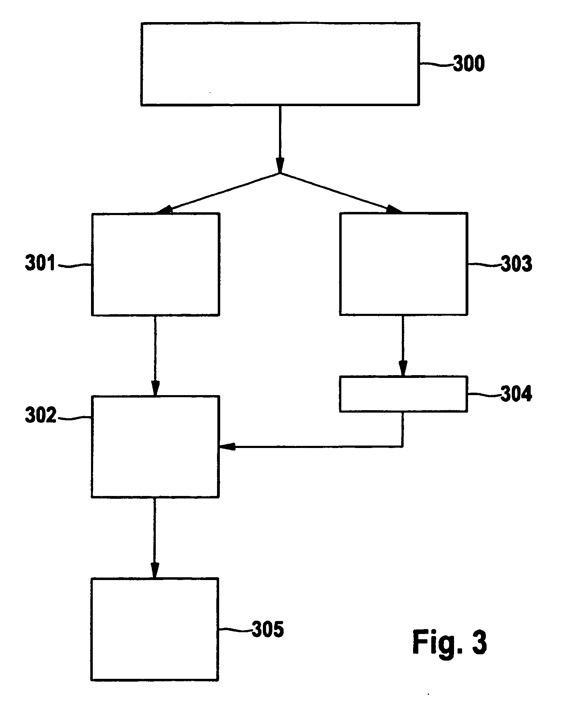

Figur 3 erläutert in einem Flussdiagramm das erfindungsgemäße Verfahren. In Verfahrensschritt 300 wird beispielsweise als das Unfallsignal ein oder mehrere Beschleunigungssignale bereitgestellt. Die Bereitstellung erfolgt durch die Schnittstellen IF1 bzw. IF2. Das Beschleunigungssignal wird dabei im Verfahrensschritt 301 zur Merkmalsbildung durch das Modul V verwendet. Aus dieser Merkmalsbildung ergibt sich ein Merkmalsvektor, der einem Schwellwertvergleich in Verfahrensschritt 302 unterzogen wird. Es ist alternativ möglich, dass kein Merkmalsvektor gebildet wird und lediglich ein Signal einem zeitabhängigen Schwellwertvergleich unterzogen wird. Parallel zur Merkmalsbildung im Verfahrensschritt 301 wird im Verfahrensschritt 303 die zeitliche Änderung des Beschleunigungssignals mittels eines Minimal-Varianzschätzers durchgeführt. Daraus ergibt sich dann im Verfahrensschritt 304 die Steifigkeit, die dazu führt, den Schwellwert im Verfahrensschritt 302 zu beeinflussen. Diese Steifigkeit wird ebenfalls über das oben genannte Beeinflussungssignal üblicherweise durch einen Schwellwertvergleich herausgefunden. Im Verfahrensschritt 305 erfolgt dann in Abhängigkeit von dem Schwellwertvergleich in Verfahrensschritt 302 die Bildung des Ansteuerungssignals für die Zündschaltung FLIC.

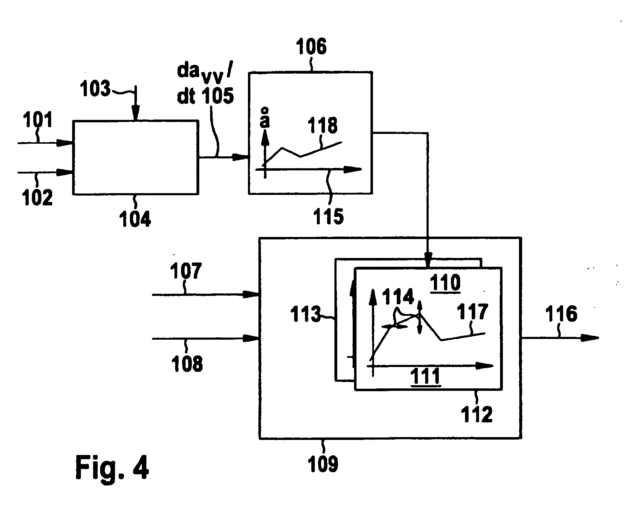

Figur 4 zeigt in einem Blockschaltbild, wie das erfindungsgemäße Verfahren gestaltet ist. In einen Minimal-Varianzschätzer, hier den sogenannten RLS-Schätzer 104, gehen die Beschleunigung 101 und ein Crashtimer 102 als Eingangssignale ein. Zusätzlich wird ein Vergessensfaktor 103 spezifiziert, der ebenfalls in den RLS-Schätzer 104 eingeht. Der Vergessensfaktor 103 dient als fahrzeugabhängiger Applikationsparameter.

Auf Basis dieser Eingangssignale 101, 102 und 103 bestimmt der RLS-Schätzer 104 den Schätzwert daᵥᵥ /dt 105. Dieser wird im Folgenden mit ä der Einfachheit halber benannt. Dieses Signal ä wird in dem Block 106 einem Schwellwertvergleich unterzogen. Dafür weist der Block eine Kennlinie 118 auf, die empirisch festgestellt wurde. Die Kennlinie wird in ein Diagramm eingetragen, das auf der Ordinate ä und auf der Abszisse ein weiteres Merkmal 115 aufweist, wie beispielsweise der integrierten Beschleunigung. Anstatt können jedoch auch andere Merkmale in Frage kommen.

Überschreitet das vom RLS-Schätzer 104 gewonnene Schätzsignal 105 die in einem Kallibrationsprozess gewonnene Kennlinie 118 von ä über dem Merkmal 2 115, so werden im schwellenbasierten Kernalgorithmus 109 definierte Kennlinien 112 und 113 verändert. Dies ist durch die Pfeile 114 angedeutet. Prinzipiell ist es allerdings auch möglich, auf Basis des Ausgangssignals 106, das ist das Beeinflussungssignal, zwischen verschiedenen Kennlinien 112 und 113 hin- und herzuschalten. Die Kennlinien 112 und 113 beinhalten Trennlinien 117 zwischen den beiden Bereichen 110 und 111. Beispielsweise können diese Bereiche den Feuerbereich 110 und den Nicht-Feuerbereich 111 darstellen. Liegt die Kombination des Merkmalsvektors aus Merkmal 1107 und Merkmal M 108 oberhalb der Kennlinie 117 im Bereich 110, so wird ein Ausgangssignal 116 erzeugt, das die Ansteuerung der Personenschutzmittel durch die Zündleitung FLIC bewirkt.

Denkbar ist auch, dass der Ausgang 116 des schwellenbasierten Ansteuerungsalgorithmus eine Nachricht über einen CAN-Bus verschickt, auf dessen Basis einem weiteren Steuergerät eine Aktion angetriggert wird wie beispielsweise ein Funksignal mit einer Notrufmeldung auszugeben.

Bei dem Crash-Timer 102 handelt es sich um die Algorithmus-interne Zeitbasis. Um die zeitliche Ableitung zu bilden, muss ein Zeitsignal verwendet werden, das in jedem Echtzeitzyklus inkrementiert wird. Üblicherweise stellt der Crash-Timer 102 dieses Zeitsignal bereit.

## Patentansprüche

1. Verfahren zur Ansteuerung von Personenschutzmitteln (PS) für ein Fahrzeug (FZ), wobei die Ansteuerung in Abhängigkeit von einer Steifigkeit eines Unfallgegners erfolgt, wobei, eine Bestimmung der Steifigkeit in Abhängigkeit von einer zeitlichen Änderung wenigstens eines Beschleunigungssignals erfolgt, **dadurch gekennzeichnet, dass** die zeitliche Änderung mittels eines Minimal-Varianzschätzers bestimmt wird.

2. Verfahren nach Anspruch 1, **dadurch gekennzeichnet, dass** der Minimal-Varianzschätzer (MVS) ein rekursiver Least-Square-Schätzer (RLS) ist.

3. Verfahren nach Anspruch 2, **dadurch gekennzeichnet, dass** dem rekursiven Least-Square-Schätzer (RLS) ein Vergessensfaktor (103) zugeführt wird, wobei der Vergessensfaktor (103) vom Fahrzeugtyp abhängt.

4. Verfahren nach Anspruch 2 oder 3, **dadurch gekennzeichnet, dass** der Minimal-Varianzschätzer (MVS) gedächtnisbehaftet ist.

5. Verfahren nach einem der Ansprüche 1 bis 4, **dadurch gekennzeichnet, dass** ein Ausgangssignal des Minimal-Varianzschätzers (MVS) einem ersten Schwellwertvergleich in Abhängigkeit von wenigstens einem ersten Merkmal (115) unterzogen wird, wobei das wenigstens eine erste Merkmal (115) von wenigstens einem Unfallsignal abgeleitet wird, das ein Ergebnis des ersten Schwellwertvergleichs zur Beeinflussung eines Ansteuerungsalgorithmus (109) verwendet.

6. Verfahren nach Anspruch 5, **dadurch gekennzeichnet, dass** der Ansteuerungsalgorithmus (109) einen Merkmalsvektor aus mindestens einem zweiten und einem dritten Merkmal (107, 108) mit einem zweiten Schwellwert (117) vergleicht, um ein Ansteuerungssignal (116) zu erzeugen, wobei das mindestens eine zweite und dritte Merkmal (107, 108) in Abhängigkeit von dem wenigstens einen Unfallsignal erzeugt werden.

7. Steuergerät (SG) zur Ansteuerung von Personenschutzmitteln (PS) für ein Fahrzeug (FZ) mit:
- einer Ansteuerungsschaltung (AS), die ein Steifigkeitsmodul (MVS, 10 S1) zur Ermittlung der Steifigkeit eines Unfallgegners aufweist, wobei die Ansteuerungsschaltung (AS) in Abhängigkeit von der Steifigkeit die Personenschutzmittel (PS) ansteuert, wobei das Steifigkeitsmodul (MVS, S1) derart konfiguriert ist, dass das Steifigkeilsmodul (MVS, S1) die Steifigkeit in Abhängigkeit von einer zeitlichen Änderung wenigstens eines Beschleunigungssignals ermittelt, **dadurch gekennzeichnet, dass** das Steifigkeitsmodul (MVS, S1) einen Minimal-Varianzschätzer (MVS) aufweist, der die zeitliche Änderung bestimmt.

8. Steuergerät nach Anspruch 7, **dadurch gekennzeichnet, dass** der Minimal-Varianzschätzer (MVS) derart mit einem Schwellwertvergleicher (S1) verbunden ist, dass ein Ergebnis des Schwellwertvergleichs zur Beeinflussung eines Ansteuerungsalgorithmus (109) auf der Ansteuerungsschaltung (AS) verwendet wird.

## Claims

1. Method for controlling personal safety devices (PS) for a vehicle (FZ), wherein the control is carried out as a function of the rigidity of another party in an accident, wherein the rigidity is determined as a function of a change over time in at least one acceleration signal, **characterized in that** the change over time is determined by a means of a minimal variance estimator.

2. Method according to Claim 1, **characterized in that** the minimal variance estimator (MVS) is a recursive least square estimator (RLS).

3. Method according to Claim 2, **characterized in that** a forgetting factor (103) is fed to the recursive least square estimator (RLS), wherein the forgetting factor (103) depends on the type of vehicle.

4. Method according to Claim 2 or 3, **characterized in that** the minimal variance estimator (MVS) is memory-conditioned.

5. Method according to one of Claims 1 to 4, **characterized in that** an output signal of the minimal variance estimator (MVS) is subjected to a first threshold value comparison as a function of at least one first feature (115), wherein the at least one first feature (115) is derived from at least one accident signal which uses a result of the first threshold value comparison to influence a control algorithm (109).

6. Method according to Claim 5, **characterized in that** the control algorithm (109) compares a feature vector from at least a second and a third feature (107, 108) with a second threshold value (117) in order to generate a control signal (116), wherein the at least one second and third feature (107, 108) are generated as a function of the at least one accident signal.

7. Control device (SG) for controlling personal safety devices (PS) for a vehicle (FZ), having:
- a control circuit (AS), which has a rigidity module (MVS, 10, S1) for determining the rigidity of another party in an accident, wherein the control circuit (AS) controls the personal safety devices (PS) as a function of the rigidity, wherein the rigidity module (MVS, S1) is configured in such a way that the rigidity module (MVS, S1) determines the rigidity as a function of a change over time in at least one acceleration signal, **characterized in that** the rigidity module (MVS, S1) has a minimal variance estimator (MVS) which determines the change over time.

8. Control device according to Claim 7, **characterized in that** the minimal variance estimator (MVS) is connected to a threshold value comparator (S1) in such a way that a result of the threshold value comparison is used to influence a control algorithm (109) at the control circuit (AS).

## Revendications

1. Procédé de commande de moyens de protection personnelle (PS) pour un véhicule (FZ), la commande étant effectuée en fonction d'une rigidité d'une partie impliquée dans un accident, une détermination de la rigidité étant effectuée en fonction d'une variation dans le temps d'au moins un signal d'accélération, **caractérisé en ce que** la variation dans le temps est déterminée au moyen d'un dispositif d'estimation de la variance minimale.

2. Procédé selon la revendication 1, **caractérisé en ce que** le dispositif d'estimation de la variance minimale (MVS) est un dispositif d'estimation des moindres carrés récursif (RLS).

3. Procédé selon la revendication 2, **caractérisé en ce qu'**un facteur d'oubli (103) est acheminé au dispositif d'estimation des moindres carrés récursif (RLS), le facteur d'oubli (103) étant dépendant du type de véhicule.

4. Procédé selon la revendication 2 ou 3, **caractérisé en ce que** le dispositif d'estimation de la variance minimale (MVS) est atteint d'une mémoire.

5. Procédé selon l'une des revendications 1 à 4, **caractérisé en ce qu'**un signal de sortie du dispositif d'estimation de la variance minimale (MVS) est soumis à une première comparaison avec une valeur de seuil en fonction d'au moins une première caractéristique (115), ladite au moins une première caractéristique (115) étant dérivée d'au moins un signal d'accident, qui utilise un résultat de la première comparaison avec une valeur de seuil pour influencer un algorithme de commande (109).

6. Procédé selon la revendication 5, **caractérisé en ce que** l'algorithme de commande (109) compare un vecteur de caractéristique composé d'au moins une deuxième et une troisième caractéristique (107, 108) avec une deuxième valeur de seuil (117) afin de générer un signal de commande (116), lesdites au moins une deuxième et troisième caractéristiques (107, 108) étant générées en fonction de l'au moins un signal d'accident.

7. Contrôleur (SG) pour commander des moyens de protection personnelle (PS) pour un véhicule (FZ) comprenant :
- un circuit de commande (AS) qui présente un module de rigidité (MVS, 10 S1) pour déterminer la rigidité d'une partie impliquée dans un accident, le circuit de commande (AS) commandant les moyens de protection personnelle (PS) en fonction de la rigidité, le module de rigidité (MVS, S1) étant configuré de telle sorte que le module de rigidité (MVS, S1) détermine la rigidité en fonction d'une variation dans le temps d'au moins un signal d'accélération, **caractérisé en ce que** le module de rigidité (MVS, S1) présente un dispositif d'estimation de la variance minimale (MVS) qui détermine la variation dans le temps.

8. Contrôleur selon la revendication 7, **caractérisé en ce que** le dispositif d'estimation de la variance minimale (MVS) est relié avec un comparateur de valeurs de seuil (S1) de telle sorte qu'un résultat de la comparaison avec une valeur de seuil est utilisé pour influencer le circuit de commande (AS) avec un algorithme de commande (109).
